(19) Europäisches Patentamt
European Patent Office
Office européen des brevets

(11) Numéro de publication : 0 442 785 A1

(12) **DEMANDE DE BREVET EUROPEEN**

(21) Numéro de dépôt : 91400297.7

(51) Int. Cl.$^5$ : B01D 61/14, C08G 79/02

(22) Date de dépôt : 07.02.91

(30) Priorité : 13.02.90 FR 9001690

(43) Date de publication de la demande : 21.08.91 Bulletin 91/34

(84) Etats contractants désignés : AT BE CH DE DK ES FR GB GR IT LI LU NL SE

(71) Demandeur : ATOCHEM
4 & 8, Cours Michelet La Défense 10
F-92800 Puteaux (FR)

(72) Inventeur : Chambrette, Jean-Paul
9 Rue Caplanne
F-64140 Billere (FR)
Inventeur : Orozco, José Luis
Impasse du Beroy Cami, Lotissement du Penin
F-64140 Lons (FR)
Inventeur : Morin, Daniel
11 Rue Molière
F-64300 Orthez (FR)
Inventeur : Potin, Philippe
9 Rue des Paquerettes
F-64140 Billere (FR)

(74) Mandataire : Rochet, Michel et al
ATOCHEM Département Propriété Industrielle
F-92091 Paris la Défense Cédex 42 (FR)

(54) **Procédé de purification de solutions ou suspensions de polyorganophosphazène par membranes.**

(57) L'invention concerne la purification des solutions ou suspensions de polyorganophosphazènes par un procédé utilisant des membranes semi-perméables.

Cette technique s'applique aux polyphosphazènes aussi bien organosolubles qu'hydrosolubles et permet de sélectionner les impuretés dont l'élimination est désirée et d'obtenir le degré de purification voulu.

EP 0 442 785 A1

Jouve, 18, rue Saint-Denis, 75001 PARIS

# PROCEDE DE PURIFICATION DE SOLUTIONS OU SUSPENSIONS DE POLYORGANOPHOSPHAZENE PAR MEMBRANES

L'invention a pour objet un procédé de purification de solutions ou de suspensions de polyorganophosphazènes.

Les polyorganophosphazènes sont des polymères comprenant une pluralité de motifs de formule :

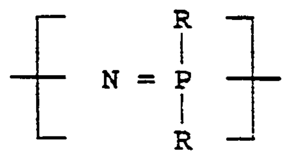

(I)

dans laquelle les symboles R qui peuvent être identiques ou différents dans un même motif ou d'un motif à l'autre peuvent notamment représenter des radicaux alkyle, aryle, alkoxy, fluoroalkoxy, aryloxy, alkyl- ou arylsulfure, alkyl- ou arylamino.

Ces polymères de formule I seront appelés indifféremment polyorganophosphazènes ou plus simplement polyphosphazènes.

Ces polymères sont obtenus par substitution des atomes de chlore du polydichlorophosphazène par des nucléophiles selon le schéma :

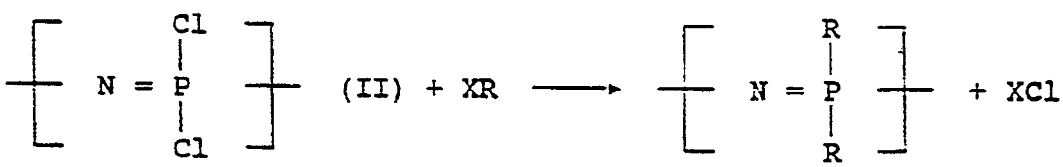


X désignant notamment un atome d'hydrogène ou un métal alcalin, R ayant la signification donnée précédemment.

Cette réaction de substitution est effectuée en solution et afin d'en assurer une conversion complète, on opère généralement en présence d'un excès d'agent nucléophile par rapport aux atomes de chlore à substituer. L'isolement de ces polymères à l'état pur implique donc l'élimination du solvant, des réactifs excédentaires et des sels métalliques des agents nucléophiles après substitution.

Il a déjà été proposé pour l'élimination des sels métalliques et plus particulièrement l'élimination de NaCl, un procédé d'extraction par lavage à l'eau (Jap. 59/45324) ou à l'aide d'un mélange d'isopropanol et d'eau (US 4.576.806). Ce procédé n'est évidemment pas applicable dans le cas d'un polyphosphazène hydrosoluble.

Pour l'élimination du solvant et des réactifs excédentaires, une méthode consiste à précipiter les polymères en versant leur solution dans un liquide précipitant et à renouveler cette opération jusqu'à l'obtention de la pureté désirée (H.R. Allcock et Coll. Inorg. Chem. 5 (10), 1709, (1966). Ce procédé oblige à mettre en oeuvre au moins deux types de solvants qui nécessitent d'être ultérieurement séparés, ce qui est d'autant plus coûteux que les volumes en jeu doivent être importants pour que la purification soit complète. De plus, l'aspect physique le plus courant d'un polyphosphazène étant celui d'une gomme, il n'est généralement pas possible d'opérer simplement dans un réacteur agité classique, car la récupération de la gomme, souvent collante, y est très difficile.

Dans la demande de brevet français n' 87.14215, on a proposé une technique comprenant la distillation du solvant directement dans un malaxeur chauffé, éventuellement sous vide et le lavage du polyphosphazène par trituration en présence d'un non solvant du polymère.

Dans le cas particulier des polyaryloxypiosphazènes, un procédé d'élimination des phénols excédentaires a été décrit (US 4.789.728). Il consiste à laver le polymère en solution dans le cyclohexane, par une solution hydroalcoolique de soude. Ce procédé conduit fréquemment à des émulsions et nécessite de séparer les phénols et l'alcool avant le rejet de l'eau.

L'invention propose un procédé permettant d'assurer l'élimination partielle ou totale de tous les produits solubles dans le même solvant que celui du polymère et de masse inférieure à un certain niveau. Ainsi, par exemple, dans le cas d'un polyphosphazène soluble en milieu aqueux, il sera possible d'éliminer les chlorures de sodium ou d'ammonium et les réactifs excédentaires hydrosolubles tels que certaines amines, glycols ou polyéthers. Dans le cas d'un polyphosphazène soluble dans un hydrocarbure, ce procédé permettra l'élimination des réactifs excédentaires solubles dans ledit hydrocarbure.

L'invention propose également un procédé de purification d'un polyphosphazène insoluble à la fois en milieu organique et en milieu aqueux, dès lors que ce polymère peut être mis sous forme de suspension ou gel véhiculable par exemple par pompage.

L'invention propose également un procédé permettant d'effectuer une préconcentration partielle de la solution ou suspension sortant du réacteur de substitution.

Ce procédé consiste à mettre la solution ou suspension de polyorganophosphazène, renfermant notamment des réactifs de substitution et/ou des produits issus de cette substitution en contact avec une membrane semi-perméable et dont le seuil de coupure correspond aux produits à éliminer et à éliminer lesdits réactifs et/ou produits par perméation à travers ladite membrane sous l'effet d'un gradient de pression transmembranaire.

Le passage transmembranaire des impuretés précitées peut être obtenu par application d'une pression côté solution ou suspension à traiter et/ou création d'un vide partiel côté perméat. A titre d'information, la pression relative côté solution est en général de l'ordre de $5.10^4$ à $2.10^6$ Pa et de préférence de $10^5$ à $10^6$ Pa, la pression absolue côté perméat pouvant aller de $10^3$ Pa jusqu'à $10^5$ Pa.

Dans le but d'éviter une accumulation de polymères à la surface de la membrane, il est avantageux de faire circuler la solution à traiter de manière sensiblement tangentielle à la surface de ladite membrane.

Les membranes semi-perméables peuvent être choisies dans une large gamme de produits, le choix étant guidé essentiellement par la stabilité physique et chimique de la membrane au contact de la solution/suspension à traiter et par la zone de coupure désirée pour l'opération de purification. Ces membranes peuvent se présenter sous forme de tubes, de fibres creuses, de membranes planes ou enroulées en spirale.

Ces membranes peuvent être formées à partir de matériaux organiques ou inorganiques.

A titre d'illustration de matériaux inorganiques, on peut citer les métaux poreux et les alliages de métaux poreux, ces membranes métalliques étant généralement constituées de métaux frittés ; le carbone poreux, dont la surface peut être revêtue par exemple au moyen d'une fine couche d'oxyde de zirconium, d'oxyde d'aluminium ou d'oxyde de silicium ; le verre poreux ; les céramiques, ces dernières pouvant également porter un revêtement par exemple en oxyde d'aluminium ; l'oxyde d'aluminium éventuellement revêtu d'oxyde de zirconium.

A titre d'illustration des matériaux organiques, on peut citer les polymères naturels et synthétiques, y compris leurs mélanges et alliages, qu'il s'agisse de polymères thermoplastiques ou thermodurcissables. Parmi ces polymères, on citera notamment les polysulfones ; les polystyrènes y compris les copolymères du styrène par exemple avec de l'acrylonitrile et/ou du butadiène ; les polycarbonates ; les polymères cellulosiques ; les polyamides et polyimides, y compris les polyamides et polyimiques aromatiques ; les polyéthers ; les polyaryléthers tels que le polyoxyde de phénylène ; les polyesters, y compris les polyesters téréphtaliques et les polyacrylates et polyméthacrylates ; les polysulfures ; les polymères dérivés de monomères à insaturation oléfinique autres que ceux mentionnés plus haut, tels que le polyéthylène, le polypropylène, le poly(butène-1), le poly(4-méthylpentène-1) ; les polymères vinyliques tels que le polychlorure de vinyle, le polyfluorure de vinyle, le polychlorure de vinylidène, les poly(esters vinyliques) ; les polyphosphazènes.

D'une manière générale, les membranes sous forme de fibre creuse présentent un diamètre externe compris entre environ 25 et environ 2500 µm et une épaisseur de paroi comprise entre environ 2 et environ 50 µm, les parois de ces fibres ayant des pores dont le diamètre est généralement inférieur à 2 µm et de préférence inférieur à 0,1 µm.

Les membranes planes ou tubulaires présentent généralement une épaisseur de paroi filtrante comprise entre environ 30 µm et environ 500 µm.

La fabrication des membranes planes, tubulaires, ou sous forme de fibres creuses mentionnées plus haut est décrite dans la littérature et ne constitue donc pas en elle-même un objet de l'invention. On peut par exemple se référer à Kirk Othmer - "Hollow Fiber Membrane" - Enc. of Chem. Techn. 12 3° Edition 1980 - pp. 492-517; "Membranes" : Enc. of Pol. Sc. & Eng. 9 2° Edition (1987) pp. 509-579.

Ainsi qu'il a été précisé, le choix de l'une ou l'autre des configurations de membranes de même que celui du matériau constituant la membrane tiendra compte à la fois de la tenue de ladite membrane dans le milieu avec lequel elle est en contact et de la valeur de masse moléculaire qu'elle est susceptible de laisser passer. Ainsi, si le but visé n'est que d'éliminer les agents nucléophiles excédentaires et/ou les sels dissous résultant de la réaction de substitution et/ou des solvants et/ou des catalyseurs mis en oeuvre pour cette réaction, on pourra choisir des membranes dont le seuil de coupure se situe aux alentours de 1000 à 5000 Daltons (g/mole). Si par contre on veut également éliminer des oligomères ou des polymères de faible masse moléculaire, on pourra utiliser des membranes à seuil de coupure très supérieur pouvant atteindre 50.000 Daltons, voire davantage. D'une manière générale, un seuil de coupure de l'ordre de 5000 à 15000 Daltons est particulièrement adapté aux solutions ou suspensions à purifier.

Le procédé conforme à l'invention comprend la mise en contact de la solution ou suspension à purifier avec

la membrane semi-perméable et l'élimination des impuretés par perméation à travers ladite membrane.

Compte tenu de l'élimination d'une partie du solvant avec les impuretés, du solvant propre est injecté dans la solution de polyphosphazène soumise au traitement de purification.

Selon une variante de ce procédé, la solution de polyphosphazène peut être soumise en premier lieu à une préconcentration dans le but de réduire le volume de solvant nécessaire au lavage des impuretés.

Le procédé peut être avantageusement mis en oeuvre selon l'une des variantes suivantes :

Selon une première variante, après la phase de préconcentration mentionnée ci-avant mais qui reste facultative, on envoie vers la cellule de perméation la solution ou suspension de polyphosphazène à purifier, recueille le perméat d'un côté de la membrane semi-perméable et recycle le rétentat dans une boucle de perméation alimentée en solution ou suspension à traiter et en solvant neuf. Ce procédé est schématisé sur la figure 1.

Selon une seconde variante, le rétentat est directement recyclé dans le bac contenant la solution ou suspension à purifier, en même temps que du solvant neuf y est admis. Cette seconde variante est schématisée sur la figure 2.

Sur ces figures, les symboles ont les significations suivantes :

(1) désigne la solution de polymère à purifier
(2) désigne la membrane semi-perméable
(3) désigne le solvant neuf
(4) désigne la boucle de perméation (Fig. 1)
(P) désigne le perméat
(R) désigne le rétentat

Dans les deux cas, le passage de la solution ou suspension à purifier sur ou dans la membrane semi-perméable - selon qu'il s'agit d'une membrane plane, tubulaire ou de fibres creuses - peut être répété jusqu'à obtention à la fois du degré de pureté désiré et, en jouant sur la quantité de solvant neuf injecté dans le circuit, du taux de concentration également souhaité.

Le solvant contenu dans le perméat peut éventuellement être recyclé en solvant propre par distillation.

Si on effectue une perméation discontinue en une seule étape, le volume de solution ou suspension de polymère restant constant et égal à celui de la boucle de perméation, la concentration en impuretés diminue approximativement exponentiellement avec le volume de perméat recueilli selon une loi du type $C = Co \exp(-Vp/Vb)$

où

C est la concentration en impureté dans le rétentat
Co est la concentration en impureté dans le rétentat en début de filtration
Vp est le volume de perméat recueilli
Vb est le volume de la boucle de perméation

On peut également effectuer une perméation discontinue multiétage. Dans ce cas la solution/suspension initiale est purifiée dans la boucle d'un premier étage à l'aide du perméat de la boucle d'un second étage. Quand la solution/suspension initiale de polyphosphazène a atteint un certain degré de pureté, elle est transférée dans la boucle du deuxième étage, où elle est purifiée jusqu'à un certain degré à l'aide du perméat d'un troisième étage et ainsi de suite. Cette technique permet de ne faire appel à du solvant neuf qu'au niveau du dernier étage et seul le perméat du premier étage est à envoyer vers un évaporateur destiné à recycler le solvant.

Selon une variante de cette technique, on remplace le fonctionnement en discontinu par un fonctionnement multiétages en continu. Dans ce cas, la solution/suspension de polyphosphazène passe d'un étage au suivant de manière continue, de même que le perméat circule du dernier étage vers le premier. Cette façon de procéder permet de régler le degré de purification en agissant sur le débit d'entrée de la solution/suspension à purifier dans la boucle du premier étage et du débit d'entrée du solvant pur dans la boucle du dernier étage.

On arrête la perméation lorsque la concentration en impuretés visée est atteinte. Le solvant du rétentat peut alors être éliminé, par évaporation par exemple, de manière à obtenir le polymère purifié final.

Le procédé conforme à l'invention est applicable à la purification associée éventuellement à la concentration de solutions ou suspensions de polyphosphazènes quel que soit le procédé retenu pour la préparation desdits polyphosphazènes ou des polydichlorophosphazènes dont ils dérivent par substitution comme indiqué précédemment. Il convient notamment à la purification des polyphosphazènes issus des polydichlorophosphazènes préparés par les deux grands procédés c'est-à-dire les procédés décrits dans les brevets US 3,370,020 et EP 026685.

Il s'applique aux différents polyphosphazènes de formule I dérivés de ces polydichlorophosphazènes, et tout particulièrement aux polyphosphazènes de formule I portant des substituants alkoxy ou fluoroalkoxy ou encore des substituants aryloxy et notamment phénoxy.

Ce procédé présente un ensemble d'avantages remarquables et notamment :

– il permet une élimination des impuretés à la fois rapide et aussi complète qu'on le désire ;

– il ne s'accompagne d'aucune dégradation mécanique ou thermique du polyphosphazène, ce dernier restant en solution ou suspension et sa purification pouvant s'effectuer à des températures inférieures aux températures provoquant une dégradation du polymère ;

– il permet, par un choix approprié de la membrane, d'éliminer les oligomères et, partant, d'accroître la masse moléculaire moyenne du polymère final et d'abaisser la polydispersité ;

– il permet à faible consommation d'énergie d'effectuer une préconcentration de la solution de polymère ;

– il est quasi insensible aux variations de qualité du produit à traiter, qu'il s'agisse du polymère lui-même et notamment de ses substituants, qu'il s'agisse du solvant de la solution ou suspension ou encore de la concentration initiale de cette solution ou suspension.

Les exemples suivants illustrent l'invention.

Dans ces exemples on utilise un polyphosphazène substitué par différents phénols, selon la répartition suivante (pourcentages molaires) :

– 11,3 % de groupements dérivés d'o.allylphénol

– 37,3 % de groupements dérivés de p.butyl-sec. phénol

– 51,4 % de groupements dérivés de p.méthoxyphénol

Les membranes utilisées sont des membranes tubulaires en carbone poreux revêtu intérieurement d'une fine couche d'oxyde de zirconium. Ces membranes, qui présentent un seuil de coupure de 10.000 Daltons sont constituées par des tubes de diamètres interne 6 mm et externe 10 mm. La surface des membranes est de $7,54.10^{-3}$ $m^2$ pour les exemples 1, 2 et 34 (utilisation d'une membrane tubulaire de 20 cm de long) et 0,316 $m^2$ pour l'exemple 4 (2 faisceaux de 7 tubes de 1,20 m de long). La pression transmembranaire est d'environ $3,5.10^5$ Pa et la vitesse de circulation est de l'ordre de 2 m/s. Le solvant est le toluène. L'appareillage utilisé est représenté sur la figure 1.

## EXEMPLE 1

245 g d'une solution de substitution neutralisée et filtrée est placée dans le réservoir de polyphosphazène. La composition de cette solution est la suivante (en poids) :

| | |
|---|---|
| - polymère substitué | 10 % |
| - orthodicilorobenzène (ODCB) | 14,2 % |
| - O. allyl phénol | 0,39 % |
| - p.butyl-sec phénol | 1,1 % |
| - p.méthoxy phénol | 0,55 % |
| - toluène | 74 % |

On effectue une préconcentration qui dure 3h20 au bout desquelles la masse de solution polymérique a été réduite à 84,1 g, lesquels se trouvent en totalité dans la boucle de perméation.

Après la phase de concentration, on alimente en toluène pur la boucle de perméation de manière à compenser le volume de perméat éliminé. La température est réglée à 30°C. Au bout de 11h50, on a recueilli 764 g de perméat. Dans le rétentat final la concentration en polymère est de 29 % et les phénols sont indécelables par CPG (concentration inférieure à 0,001 %). La teneur finale en ODCB est de 0,02 %.

Cet exemple montre bien que l'élimination des phénols et de l'ODCB est quantitative.

On constate également, par GPC, une augmentation de la masse moléculaire moyenne en poids de 336000 à 386000, ainsi qu'une diminution de l'indice de polydispersité de 38 à 6. Ceci est dû à l'élimination dans le perméat d'oligomères de masse inférieure à 10.000 et au fait qu'il n'y a pas eu de dégradation de polymère au cours de l'opération.

## EXEMPLE 2

Dans cet exemple, les concentrations initiales en phénols et ODCB sont supérieures à celles de l'exemple 1. La solution (190 ml au départ) est concentrée par perméation de 9 % à 20 % en polymère puis lavée par 180 ml de toluène. On obtient les résultats suivants :

| | Solution initiale (%) pondéral | Solution concentrée et lavée (%) pondéral |
|---|---|---|
| Polymère (> 10000) | 9 | 20 |
| Oligomère (< 10000) | 4 | traces |
| O D C B | 17,5 | 2,2 |
| p.méthoxyphénol | 3,7 | 0,57 |
| p.butyl.sec phénol | 2,3 | 0,32 |
| O.allyl phénol | 0,37 | 0,05 |
| Toluène | qsp 100.00 % | qsp 100.00 % |

Cet exemple montre bien l'élimination des oligomères de masse inférieure à 10.000, de même qu'une forte réduction de la teneur en phénols résidus de la substitution.

## EXAMPLE 3

Dans cet exemple, le TCB (trichloro-1,2,4 benzène) remplace l'ODCB.

| | Solution initiale (% pondéral) | Solution concentrée 2 fois et lavée par 900g de toluène (% pondéral) |
|---|---|---|
| Polymère | 9,4 % | 16 % |
| TCB | 31 % | 0,45 % |
| O.allyl phénol | 0,24 % | 0,0055 % |
| p.méthoxypphénol | 1,03 % | 0,017 % |
| p.butyl.sec phénol | 0,97 % | 0,0221 % |
| Toluène | qsp 100 % | qsp 100 % |

## EXEMPLE 4

L'appareillage comprend le même type de membrane que celui précédemment indiqué, mais disposé en deux modules comportant chacun 0,158 $m^2$, soit 0,316 $m^2$ au total.

La solution à purifier possède la composition suivante (pourcentages pondéraux) :

- Polyphosphazène : 12,1 %

(identique à celui de l'exemple 1)

- Trichloro-1,2,4 benzène : 17 %
- o.allyl phényl : 0,170 %
- p.méthoxy phénol : 0,254 %
- p.butyl secondaire phénol : 0,384 %
- Toluène : qsp

Cette solution est introduite dans la boucle, sous une pression moyenne de 2 bars. De cette façon, on porte la concentration en polyphosphazène dans la boucle à 21,5 % et la masse de solution est alors de 7,1 kg.

On introduit ensuite du toluène pur à 30°C dans la boucle de perméation. La pression moyenne qui s'exerce au niveau des membranes est de 3 bars. Des prises d'échantillons sont effectuées en cours de purification. Le tableau suivant montre la décroissance des concentrations des composés à éliminer en fonction des quantités de toluène introduites dans la boucle.

| | | PHENOLS EN PPM | | |
|---|---|---|---|---|
| Toluène en l | TCB en % | ALLYL | 2 METHOXY | BUTYL |
| 0 | 17,00 | 1700 | 2540 | 3840 |
| 4 | 9,20 | 970 | 1520 | 2280 |
| 6 | 6,90 | 740 | 1140 | 1700 |
| 8 | 4,50 | 500 | 820 | 1200 |
| 10 | 2,95 | 350 | 580 | 830 |
| 12 | 1,90 | 235 | 390 | 540 |
| 14 | 1,30 | 160 | 280 | 390 |
| 16 | 0,85 | 110 | 200 | 260 |
| 18 | 0,58 | 80 | 140 | 170 |

A la fin des opérations, l'analyse de la solution traitée et du perméat indique que 80 % du polyphosphazène se retrouve dans la solution traitée et 20 % dans le perméat, 90 % de la fraction contenue dans le perméat est constituée par des masses moléculaires inférieures à 10000, exprimées en équivalent polystyrène.

## Revendications

1. Procédé de purification de solutions ou suspensions de polyorganophosphazène renfermant notamment des réactifs de substitution d'un polydichlorophosphazène en polyorganophosphazène et/ou des produits issus de cette réaction de substitution, caractérisé en ce qu'il consiste à mettre la solution à purifier en contact avec une membrane semi-perméable dont le seuil de coupure correspond aux produits à éliminer et à éliminer lesdits réactifs et/ou produits par perméation à travers ladite membrane sous l'effet d'un gradient de pression transmembranaire.

2. Procédé selon la revendication 1, caractérisé en ce que le passage transmembranaire des impuretés est obtenu par application d'une pression côté solution ou suspension à traiter et/ou création d'un vide partiel côté perméat.

3. Procédé selon la revendication 2, caractérisé en ce que la pression relative côté solution ou suspension est de l'ordre de $5.10^4$ à $2.10^6$ Pa et de préférence de $10^5$ à $10^6$ Pa.

4. Procédé selon l'une quelconque des revendications 2 et 3, caractérisé en ce que la pression absolue côté perméat est comprise entre $10^3$ et $10^5$ Pa.

5. Procédé selon l'une quelconque des revendications 1 et 4, caractérisé en ce que la solution ou suspension à traiter est envoyée dans ou sur la membrane semi-perméable, le perméat est recueilli sur une face de cette membrane et le rétentat est recyclé dans une boucle de perméation alimentée en solution à traiter et en solvant neuf.

6. Procédé selon l'une quelconque des revendications 1 et 4, caractérisé en ce que le perméat est directement recyclé dans le bac contenant la solution à traiter, en même temps que du solvant neuf.

7. Procédé selon l'une quelconque des revendications 1 et 6, caractérisé en ce la solution à traiter circule de manière sensiblement tangentielle à la surface de la membrane semi-perméable.

8. Procédé selon l'une quelconque des revendications 1 à 7, caractérisé en ce que la membrane semi-perméable est choisie parmi les membranes planes, les membranes tubulaires, les fibres creuses, les membranes composites comprenant une pellicule membranaire déposée à la surface d'une fibre creuse.

9. Procédé selon l'une quelconque des revendications 1 à 8, caractérisé en ce que la membrane semi-perméable est constituée d'un matériau inorganique ou organique.

10. Procédé selon la revendication 9, caractérisé en ce que le matériau inorganique est choisi parmi les métaux poreux et les alliages de métaux poreux, le carbone poreux, le verre poreux, les céramiques, l'oxyde d'aluminium.

11. Procédé selon l'une quelconque des revendications 8 à 10, caractérisé en ce que la membrane semi-perméable est une membrane tubulaire constituée de carbone poreux portant un revêtement en oxyde de zirconium.

12. Procédé selon la revendication 9, caractérisé en ce que le matériau organique est choisi parmi les polyméres naturels et synthétiques, thermoplastiques ou thermodurcissables, leurs mélanges et alliages.

13. Procédé selon la revendication 8, caractérisé en ce que les fibres creuses présentent un diamètre externe compris entre environ 25 et environ 2500 µm et une épaisseur de paroi comprise entre environ 2 et environ 50 µm.

14. Procédé selon la revendication 8, caractérisé en ce que les membranes planes ou tubulaires ont une épaisseur ou une épaisseur de paroi comprise entre environ 30 et environ 500 µm.

15. Procédé selon l'une quelconque des revendications 1 à 14, caractérisé en ce que le seuil de coupure des membranes semi-perméables est compris entre 1000 et 50000 Daltons.

16. Procédé selon la revendication 15, caractérisé en ce que le seuil de coupure des membranes semi-perméable est compris entre 5000 et 15000 Daltons.

17. Procédé selon l'une quelconque des revendications 1 à 16, caractérisé en ce qu'il est mis en oeuvre en discontinu dans un appareillage comportant un étage de perméation.

18. Procédé selon l'une quelconque des revendications 1 à 16, caractérisé en ce qu'il est mis en oeuvre en discontinu dans un appareillage multiétages dans lequel la solution ou suspension d'un premier étage est purifiée au moyen du perméat d'un second étage puis, après purification jusqu'à un certain degré, est transféré dans la boucle dudit second étage où elle est purifiée au moyen du perméat d'un troisième étage et ainsi de suite.

19. Procédé selon l'une quelconque des revendications 1 à 16, caractérisé en ce qu'il est mis en oeuvre en

continu dans un appareillage du type décrit dans la revendication 18 mais dont les boucles de perméation et les perméats sont connectées d'étage en étage afin de régler le degré de purification de la solution/suspension par seule action sur le débit initial d'entrée de la solution/suspension dans la boucle du premier étage et le débit d'entrée du solvant dans la boucle du dernier étage.

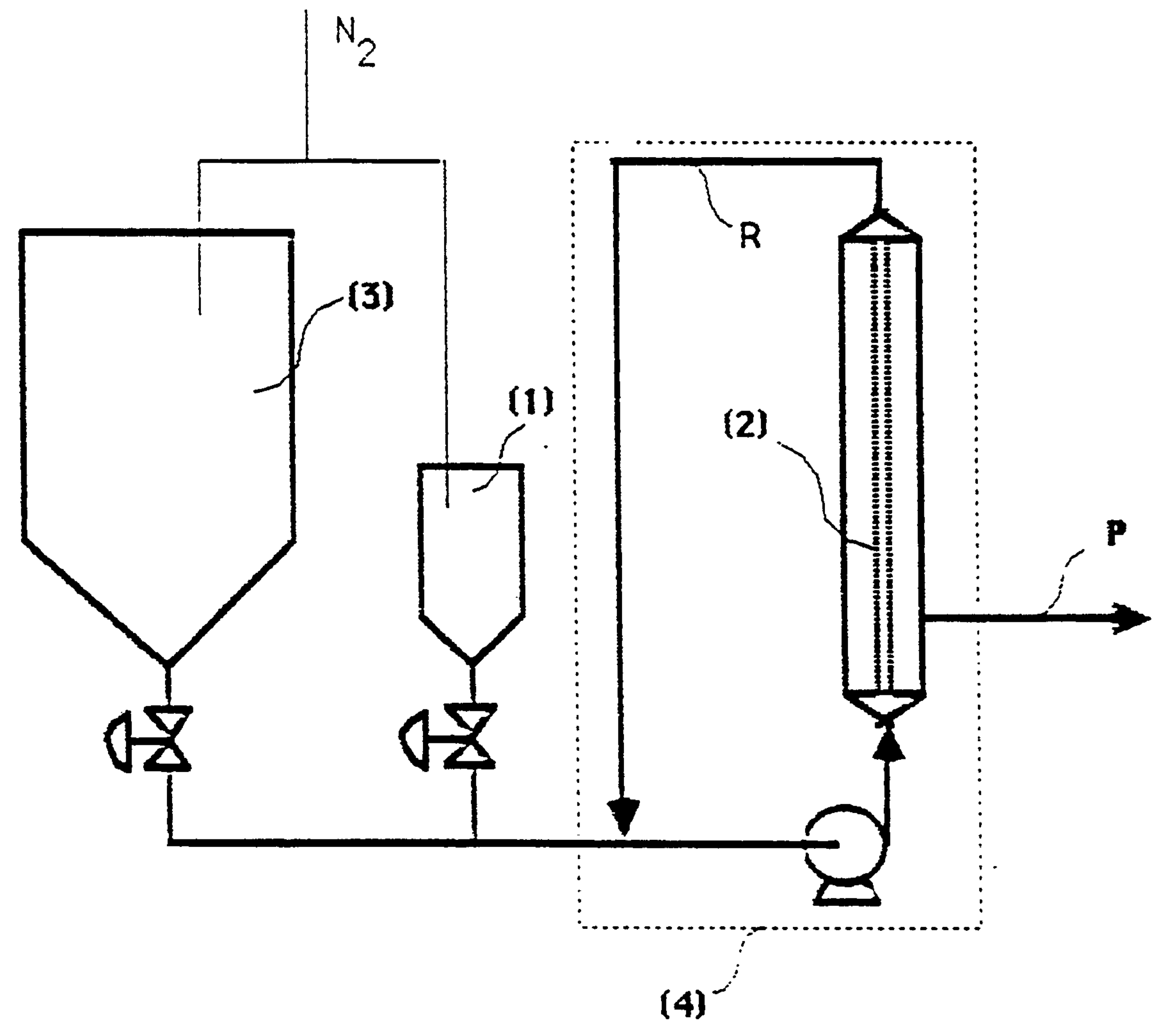


FIGURE 1

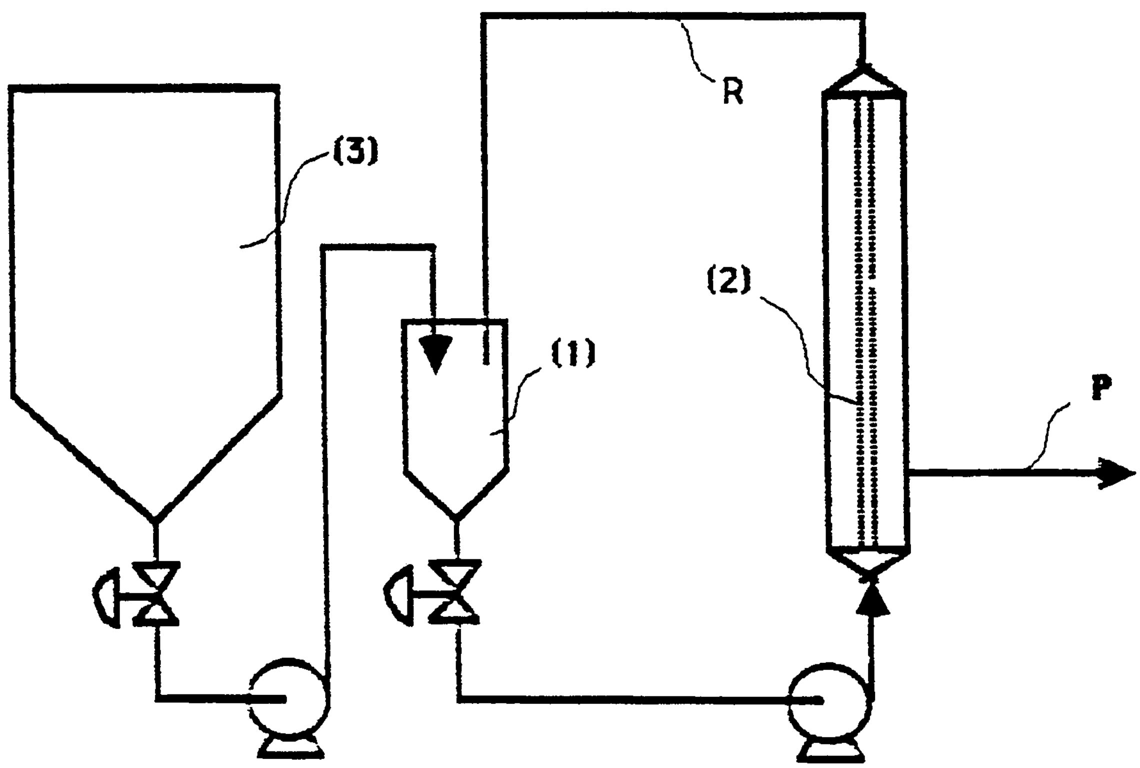


FIGURE 2